(19) Europäisches Patentamt

European Patent Office

Office européen des brevets

(11) **EP 1 372 011 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
*G02B 21/00* *(2006.01)* *G02B 27/00* *(2006.01)*

(21) Anmeldenummer: **03007649.1**

(22) Anmeldetag: **03.04.2003**

(54) **Mikroskop, insbesondere Laserscanningmikroskop mit adaptiver optischer Einrichtung**

Microscope, especially laser scanning microscope with adaptive optical device

Microscope, en particulier microscope à balayage laser avec dispositif optique adaptif

(84) Benannte Vertragsstaaten:
**AT BE BG CH CY CZ DE DK EE ES FI FR GB GR HU IE IT LI LU MC NL PT RO SE SI SK TR**

(30) Priorität: **15.06.2002 DE 10227120**

(43) Veröffentlichungstag der Anmeldung:
**17.12.2003 Patentblatt 2003/51**

(73) Patentinhaber: **CARL ZEISS JENA GmbH 07745 Jena (DE)**

(72) Erfinder:
• **Wolleschensky, Ralf 99510 Schöten (DE)**
• **Kempe, Michael 07751 Kunitz (DE)**

(56) Entgegenhaltungen:
WO-A-99/06856    GB-A- 2 321 517
US-A- 4 838 679    US-B1- 6 379 005

**Beschreibung**

Die Erfindung bezieht sich auf ein Mikroskop, insbesondere ein Laserscanningmikroskop mit einer adaptiven optischen Einrichtung zur variablen Anpassung des Beleuchtungs- und/oder Detektionsstrahlengangs an die Eigenschaften der optischen Baugruppen und/oder an die Eigenschaften der Probe.

Die Nutzung adaptiver Optiken in Mikroskopen ist im Stand der Technik an sich bereits bekannt und beispielsweise in PCT/WO99/06656 beschrieben. Allerdings erfordert die dort offenbarte Nutzung der adaptiven Optik im Beleuchtungs- und/oder Detektionsstrahlengang die Verwendung und konstruktive Einordnung mindestens eines Strahlteilers, wodurch optische Verluste auftreten.

Eine verlustlose Einkopplung adaptiver Elemente in den Strahlengang mittels Spiegel, wie in der beiliegenden Zeichnung "Stand der Technik" im Prinzip dargestellt, ist zwar ebenfalls bekannt, führt jedoch aufgrund des schrägen Auftreffens der Strahlengänge auf die Reflektorflächen zu zusätzlichen erheblichen Aberrationen.

Darüber hinaus ist beim Stand der Technik das Zusammenspiel der adaptiven optischen Elemente mit einem Wellenfrontsensor erforderlich, wodurch im allgemeinen weitere Verluste entstehen.

Als Wellenfrontsensoren werden in diesem Zusammenhang bisher klassische Sensoren genutzt, wie beispielsweise Shack-Hartmann-Sensoren oder Interferometer, wie beispielsweise in PCT/GB99/03194 angegeben. Derartige Sensoren sind jedoch nicht gut geeignet zur dreidimensionalen Abtastung einer Probe, wie dies mit einem konfokalen Laserscanningmikroskop beabsichtigt ist. Das ist bedingt durch die Tatsache, daß im Gegensatz zur konfokalen Detektion verhältnismäßig viel unfokussiertes Licht auf den Sensor einfällt.

In WO99/06856 ist ein Mikroskop mit adaptiver Optik im Beobachtungsstrahlengang beschrieben, bei dem sich vorteilhaft zwischen Objektiv und Tubuslinse ein transmittierender Wellenfrontmodulator befindet oder ein reflektiver Wellenfrontmodulator über Strahlteiler eingekoppelt wird. Darüber hinaus ist ein Mikroskop mit adaptiver Optik im Beleuchtungsstrahlengang beschrieben. Schließlich ist ein Laserscanningmikroskop beschrieben mit einer dem Laser im Strahlengang nachgeordneten adaptiven Optik, vorteilhaft mit einer ersten adaptiven Optik zur Grob- und einer zweiten adaptiven Optik zur feineinstellung, wobei die adaptive Optik als reflektierender Wellenfrontmodulator und der Laser als Kurzpulslaser ausgebildet sein können und weiterhin eine Kombination mit einer Prechirp-Einheit vorgesehen sein kann.

In GB 2 321 517 A ist ein konfokales Mikroskop zur Messung einer festen Form einer Probe ohne transversales Scannen eines Lichtstrahls beschrieben, die eine Quelle, die einen Lichtstrahl auf ein Blendenfeld strahlt, eine Objektivlinse, die ein stationäres Bild der Blenden auf der Probe erzeugt, und einen Strahlteiler, der Licht von den Blenden durch die Linse auf die Probe richtet und der reflektiertes Licht oder Fluoreszenzlicht von der Probe auf den Photodetektor lenkt, umfaßt. Um die Höhe der Oberfläche zu bestimmen, wird der Strahl in einer Richtung auf die Probe gescannt und das Licht wird an dem Fokus maximal auf dem Detektor. Das Licht von der Quelle kann s-polarisiert sein und wird dann durch einen polarisierenden Strahlteiler und eine Viertelwellenplatte, die es in zirkular polarisiertes Licht umwandelt, gelenkt. Die Viertelwellenplatte wandelt das zurückkehrende Licht in p-polarisiertes Licht, so daß es durch den polarisierenden Strahlteiler auf den Photodetektor abgelenkt wird.

Der Erfindung liegt die Aufgabe zugrunde, ein Mikroskop der eingangs genannten Art derart weiterzubilden, daß eine verlustlose und aberrationsfreie Einkopplung der adaptiven Optik in den Beleuchtungs- und/oder Detektionsstrahlengang gewährleistet ist. Eine weitere Aufgabe der Erfindung ist die Realisierung einer geeigneten Regelung der adaptiven Optik ohne die Verwendung spezieller Wellenfrontsensoren.

Die Aufgabe wird gelöst durch ein Mikroskop mit den Merkmalen der Ansprüche 1 und 3.

Die adaptive optische Einrichtung kann insbesondere umfassen:

- zwei reflektive adaptive Elemente, die beide mit ihrer Reflektorfläche senkrecht zu der optischen Achse des Mikroskopstrahlengangs ausgerichtet sind, und einen polarisierenden Strahlteiler, dessen Teilerschicht sich im Scheitel zweier orthogonaler Arme des Mikroskopstrahlengangs befindet, wobei ein erstes adaptives Element dem einen Arm und das andere dem zweiten Arm zugeordnet ist und sich in jedem der Arme zwischen Strahlteiler und adaptivem Element eine λ/4-Platte befindet, sowie

- eine Detektionseinrichtung, auf welche das Detektionslicht gerichtet ist und die über Auswerte- und Stell einrichtungen mit den adaptiven Elementen verknüpft ist.

Das Mikroskop, insbesondere Laserscanningmikroskop, mit einer adaptiven optischen Einrichtung im Mikroskopstrahlengang kann inbesondere umfassen: zwei reflektive Elemente, von denen mindestens eines als adaptives optisches Element ausgebildet ist, die beide mit ihrer Reflektorfläche senkrecht zu den optischen Achsen des Mikroskopstrahlengangs ausgerichtet sind und einen polarisierenden Strahlteiler, dessen Teilerschicht sich im Scheitel zweier orthogonaler Arme des Mikroskopstrahlengangs oder zweier orthogonaler Teile eines gefalteten Mikroskopstrahlengangs befindet, wobei ein erstes der adaptiven Elemente dem einen Arm und das andere dem zweiten Arm zugeordnet ist und sich in jedem Arm zwischen dem Strahlteiler und dem reflektiven adaptiven Element eine λ/4-Platte befindet, sowie eine Detektionseinrichtung, auf welche das Detektienslicht gerichtet ist und die über Auswerte- und Stelleinrichtungen mit den adaptiven Elementen verknüpft ist.

Dabei sollte als Detektionseinrichtung vorzugsweise die im Laserscanningmikroskop ohnehin vorhandene Detektionseinrichtung genutzt werden.

Mit dieser Anordnung ist es je nach Auswertung bzw. Verarbeitung der Detektorsignale möglich, eine schnelle Tiefenscannung bei der dreidimensionalen Abtastung einer Probe ohne Verschiebebewegung des Mikroskopobjektivs oder der Probe zu erzielen, Aberrationen auszugleichen, die durch die Probe verursacht sind sowie auch Aberrationen zu korrigieren, die ihre Ursache in unkorrekt genutzten oder unvollständigen korrigierten optischen Komponenten, insbesondere dem Mikroskopobjektiv, haben.

Es ist vorgesehen, daß in dem einen Arm das von der Beleuchtungsquelle kommende Licht in Abhängigkeit von seinem Polarisationszustand durch die Teilerschicht und eine λ/4-Platte hindurch auf ein erstes adaptives Element trifft, dann von dessen Reflektorfläche zur Teilerschicht zurückreflektiert und dort zum Mikroskopobjektiv umgelenkt wird und/oder von der Teilerschicht in Richtung eines zweiten adaptiven Elements umgelenkt und nach Durchgang durch eine λ/4-Platte auf das zweite adaptive Elemente trifft, von diesem zur Teilerschicht zurückreflektiert wird und durch diese hindurch zum Mikroskopobjektiv gelangt, in dem anderen Arm das von einer Probe durch das Mikroskopobjektiv kommende Detektionslicht in Abhängigkeit von seinem Polarisationszustand durch die Teilerschicht und eine λ/4-Platte hindurch auf das zweite adaptive Element trifft, dann von dessen Reflektorfläche zur Teilerschicht zurückreflektiert und dort zur Detektionseinrichtung umgelenkt wird und/oder von der Teilerschicht in Richtung des ersten adaptiven Elements umgelenkt und nach Durchgang durch eine λ/4-Platte auf das erste adaptive Element trifft, vom diesem zur Teilerschicht zurückreflektiert wird und durch diese hindurch zur Detektionseinrichtung gelangt und die Detektionseinrichtung einen zweiten polarisierenden Strahlteiler sowie zwei optoelektronische Wandler aufweist, die über eine Auswerte- und Stelleinrichtung mit den adaptiven Elementen gekoppelt sind, wobei das Detektionslicht in Abhängigkeit von seinem Polarisationszustand durch den Strahlteiler hindurchtretend oder von dessen Teilerschicht umgelenkt zu dem einen oder anderen optoelektronischen Wandler gelangt.

Es wird also ein polarisierender Strahlteiler verwendet und in jedem der Arme zwischen Strahlteiler und adaptivem Element befindet sich eine λ/4-Platte. In dieser Anordnung wird in dem einen Arm das von der Beleuchtungsquelle kommende Licht in Abhängigkeit von seinem Polarisationszustand durch die Teilerschicht und eine λ/4-Platte hindurch auf das erste der adaptiven Elemente gerichtet, wird von dessen Reflektorfläche zur Teilerschicht zurückreflektiert und propagiert von dort in Richtung des Mikroskopobjektivs. Das Licht mit bezüglich des sich in Richtung des ersten adaptiven Elementes ausbreitendem Lichts orthogonaler Polarisation wird in Richtung des anderen Armes gelenkt, an dessen Ende sich ein zweites adaptives Element befindet. An diesem Element wird das Licht nach Durchgang durch eine λ/4-Platte zur Teilerschicht zurückreflektiert und gelangt durch diese hindurch zum Mikroskopobjektiv.

Das von der Probe abgestrahlte, durch das Mikroskopobjektiv kommende Detektionslicht durchläuft in Abhängigkeit von seinem Polarisationszustand den einen oder den anderen Arm, wird von dem entsprechenden reflektiven adaptiven Element zur Teilerschicht zurückreflektiert und breitet sich von dort zur Detektionseinrichtung hin aus.

Die Detektionseinrichtung weist einen zweiten polarisierenden Strahlteiler sowie zwei optoelektronische Wandler auf. In Abhängigkeit von seinem Polarisationszustand tritt das Detektionslicht durch die Teilerschicht dieses Strahlteilers hindurch zu dem einen optoelektronischen Wandler oder wird von der Teilerschicht umgelenkt zu dem anderen optoelektronischen Wandler. Das Signal von den Wandlern läßt sich eindeutig dem detektionsseitig über einen bestimmten Arm der Strahlteileranordnung mit den adaptiven Elementen gelaufenen Licht zuordnen.

Der wesentliche Vorteil dieser Anordnung besteht darin, daß eine verlust- und aberrationsfreie Ankopplung der adaptiven Optik in den Beleuchtungs- und/oder Detektionsstrahlengang des Mikroskops ermöglicht wird. Darüber hinaus ergeben sich verschiedene vorteilhafte Modi der Regelung der adaptiven Optik, wie unten näher erläutert wird. Die erfindungsgemäße Anordnung ist sowohl bei einem punktscannenden oder auch einem linienscannenden Laserscanningmikroskop nutzbar.

Zwischen dem den adaptiven Elementen zugeordneten Strahlteiler und der Detektionseinrichtung ist, dem Aufbau eines konfokalen Laserscanningmikroskop entsprechend, eine Pinholeoptik zur Fokussierung des Detekt.ionslichtes auf ein Pinhole sowie eine Linse oder Optik zur Kollimierung des Detektionslichtes vorgesehen.

Die adaptive optische Einrichtung kann insbesondere auch umfassen:

- ein adaptives reflektives Element und ein nichtadaptives reflektives Element, die beide mit ihrer Reflektorfläche senkrecht zu der optischen Achse des Mikroskopstrahlengangs ausgerichtet sind, und einen polarisierenden Strahlteiler, dessen Teilerschicht sich im Scheitel zweier orthogonaler Arme des Mikroskopstrahlengangs befindet, wobei das adaptive Element dem einen Arm und das nichtadaptive Element dem zweiten Arm zugeordnet ist und sich in jedem Arm zwischen dem Strahlteiler und dem jeweiligen reflektiven Element eine λ/4-Platte befindet, sowie

- eine Detektionseinrichtung, auf welche das Detektionslicht gerichtet ist und die über eine Auswerte- und Stelleinrichtung mit dem adaptiven Element verknüpft ist.

Das Mikroskop, insbesondere Lase-rscanningmikroskop, mit einer adaptiven optischen Einrichtung im Mikroskopstrahlengang, umfasst: ein adaptives reflektives Element und ein nichtadaptives reflektives Element, die beide mit ihrer Reflektorfläche senkrecht zu der optischen Achse des Mikroskopstrahlengangs ausgerichtet sind und einen polarisierenden Strahlteiler, dessen Teilerschicht sich im Scheitel zweier orthogonaler Arme des Mikroskopstrahlengangs oder zweier orthogonaler Teile eines mehrfach gefalteten Mikroskopstrahlengangs befindet, wobei das adaptive Element dem einen Arm und das nichtadaptive Element dem zweiten Arm zugeordnet ist und sich in jedem Arm zwischen dem Strahlteiler und dem jeweiligen reflektiven Element eine $\lambda/4$-Platte befindet, sowie eine Detektionseinrichtung, auf welche das Detektionslicht gerichtet ist und die über eine Auswerte- und Stelleinrichtung mit dem adaptiven Element verknüpft ist.

Bevorzugt sollte als Detektionseinrichtung die ohnehin vorhandene Detektionseinrichtung des Laserscanningmikroskops genutzt werden.

Es ist weiter vorgesehen, daß in dem einen Arm das von der Beleuchtungsquelle kommende Licht in Abhängigkeit von seinem Polarisationszustand durch die Teilerschicht und eine $\lambda/4$-Platte hindurch auf das adaptive Element trifft, von dessen Reflektorfläche zur Teilerschicht zurückreflektiert und von dieser zum Mikroskopobjektiv hin umgelenkt wird und/oder von der Teilerschicht in Richtung des reflektiven Elements umgelenkt, nach Durchgang durch eine $\lambda/4$-Platte vom reflektiven Elemente zur Teilerschicht zurückreflektiert wird und durch diese hindurch zum Mikroskopobjektiv gelangt, in dem anderen Arm das von einer Probe durch das Mikroskopobjektiv kommende Licht in Abhängigkeit von seinem Polarisationszustand durch die Teilerschicht und eine $\lambda/4$-Platte hindurch auf das reflektive Elemente trifft, von diesem zur Teilerschicht zurückreflektiert wird und von dort zur Detektionseinrichtung gelangt und/oder von der Teilerschicht in Richtung des adaptiven Elements umgelenkt wird, nach Durchgang durch eine $\lambda/4$-Platte vom adaptiven Element zur Teilerschicht zurückreflektiert wird und von dort ebenfalls zur Detektionseinrichtung gelangt.

Eine Ausgestaltung sieht also vor, daß in dem einen Arm das von der Beleuchtungsquelle kommende Licht in Abhängigkeit von seinem Polarisationszustand durch die Teilerschicht und eine $\lambda/4$-Platte hindurch auf das adaptiven Elemente gerichtet ist, von dessen Reflektorfläche zur Teilerschicht zurückreflektiert wird und von dort in Richtung des Mikroskopobjektivs propagiert.

Das Licht mit bezüglich des sich in Richtung des ersten adaptiven Elementes ausbreitendem Lichts orthogonaler Polarisation wird in Richtung des anderen Armes gelenkt, an dessen Ende sich ein nichtadaptives Element (ein Spiegel) befindet. An diesem Spiegel wird das Licht nach Durchgang durch eine $\lambda/4$-Platte zur Teilerschicht zurückreflektiert und gelangt durch diese hindurch zum Mikroskopobjektiv.

In dieser Ausgestaltung ist es möglich, anregungsseitig durch geeignete Polarisation des Lichtes das adaptive Element zu umgehen und in Kombination mit der Detektion des Signals vom nichtadaptiven Element eine unkorrigierte Abbildung zu erhalten bzw. durch Drehen der Polarisation schnell zwischen korrigierter und nicht korrigierter Abbildung umzuschalten.

Bei beiden genannten Ausgestaltungen kann die adaptive Einrichtung sowohl im Anregungs- und Detektionsstrahlengang, wie in der ersten Anordnung beschrieben, oder nur im Anregungsstrahlengang vorgesehen sein. Letzteres ist insbesondere zur Anwendung im Zusammenhang mit der Mehrphotonenanregung geeignet, wobei die adaptive optische Einrichtung anregungsseitig vor der Trennung von Beleuchtungs- und Detektionsstrahlengang plaziert ist.

Bevorzugt sind die adaptiven Elemente in einer Pupillenebene des Mikroskopstrahlengangs positioniert, wobei insbesondere im Strahlengang zwischen dem Strahlteiler und dem Mikroskopobjektiv eine Optik zur Abbildung der Ebene der adaptiven Elemente in eine Pupillenebene der Mikroskopanordnung vorhanden sein kann.

Vorteilhaft ist die Pupillenebene mit den reflektierenden Flächen der Scanneinrichtung identisch und die Scannoptik, das Mikroskopobjektiv sowie eine Tubuslinse sind so zueinander positioniert, daß in der Probe ein beugungsbegrenzter Spot erzeugt wird, der aufgrund der Scannbewegung in lateraler Richtung über die Probe geführt wird. Wie bereits dargelegt, kann es sich dabei um eine Punkt- oder auch eine Linienscannung handeln.

Als adaptive reflektive Elemente kommen beispielsweise Spiegel mit segmentiert verstellbarer Spiegelfläche, Membranspiegel oder reflektive Spatial Light Modulatoren in Betracht.

Eine besonders bevorzugte Ausgestaltung der erfindungsgemäßen Anordnung besteht darin, daß mindestens einem der adaptiven Elemente oder den adaptiven Elementen eine Zoomoptik zugeordnet ist, die der Anpassung der Apertur dieses adaptiven Elements bzw. des jeweiligen adaptiven Elements an die Apertur des Mikroskopobjektivs dient.

Zusätzlich kann eine Einrichtung vorgesehen sein, die es ermöglicht, zur Unterdrückung des Beleuchtungslichtes einen Wellenlängenfilter in den Detektionsstrahlengang einzuschwenken, insbesondere bei einer Fluoreszenzdetektion.

Weiterhin können auch noch Relayoptiken in den Strahlengang eingeordnet sein, die der Erzeugung einer Pupille jeweils am Ort eines adaptiven Hohlspiegels dienen.

Die Erfindung soll nachfolgend an Ausführungsbeispielen erläutert werden, dazu zeigen

Fig.1    den Strahlengang eines konfokalen Laserscanningmikroskops mit einer erfindungsgemäßen adaptiven optischen Einrichtung, umfassend zwei adaptive Spiegel,

Fig.2   eine Ausgestaltungsvariante des Strahlenganges eines konfokalen Laserscanningmikroskops mit einer erfindungsgemäßen adaptiven optischen Einrichtung, umfassend einen adaptiven und einen nicht adaptiven Spiegel,

Fig. 3   die iterative Messwertgewinnung bei der Abbildung einer biologischen Probe mit der erfindungsgemäßen Anordnung,

Fig. 4   ein Beispiel für die Möglichkeiten der Korrektur bei der Abbildung einer biologischen Probe unter Nutzung der erfindungsgemäßen Anordnung.

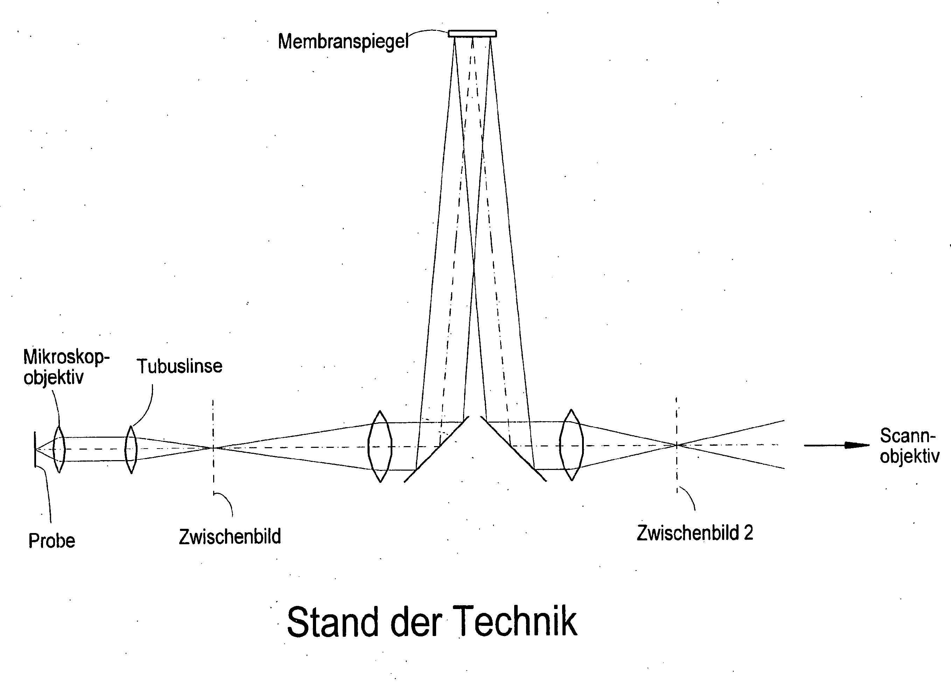

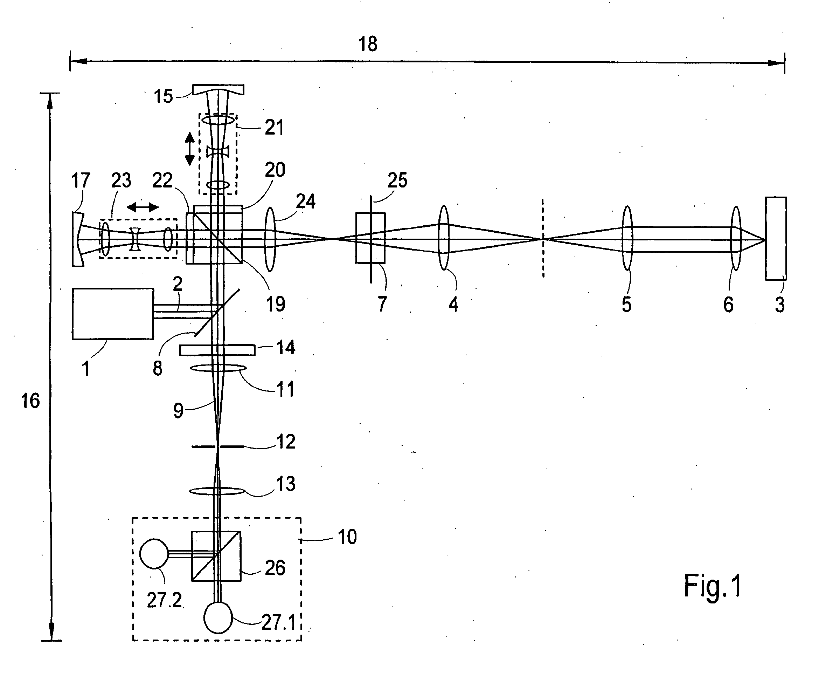

In Fig.1 ist die erfindungsgemäße Anordnung anhand des Strahlengangs eines konfokalen Laserscanningmikroskops dargestellt, bei dem das von einer Beleuchtungsquelle 1 ausgehende Beleuchtungslicht 2 auf eine Probe 3 gerichtet ist. Dabei wird mit einer Scannoptik 4, einer Tubuslinse 5 und dem Mikroskopobjektiv 6 ein beugungsbegrenzter Spot erzeugt, der mittels einer Scanneinrichtung 7 zwecks Gewinnung von Bildern in lateraler Richtung über die Probe 3 bewegt wird.

Das von der Probe 3 emittierte Licht durchläuft in umgekehrter Richtung das Mikroskopobjektiv 6, die Tubuslinse 5, die Scannoptik 4 und ist über einen Strahlteiler 8, der zur Trennung des Detektionsstrahlengangs 9 und des Beleuchtungslichtes 2 dient, auf eine Detektionseinrichtung 10 gerichtet. Dabei sind im Detektionsstrahlengang 9 dem Strahlteiler 8 noch eine Pinholeoptik 11, ein Pinhole 12 und eine Kollimationsoptik 13 nachgeordnet.

Des weiteren ist ein Wellenlängenfilter 14 vorgesehen, der insbesondere bei Fluoreszenzdetektion verhindert, daß Beleuchtungslicht 2 zur Detektionseinrichtung 10 gelangt.

Erfindungsgemäß ist ein erster adaptiver Spiegel 15 vorhanden, dessen Reflektorfläche senkrecht zur optischen Achse eines Armes 16 des Mikroskopstrahlengangs ausgerichtet ist. Außerdem ist ein weiterer adaptiver Spiegel 17 mit seiner Reflektorfläche senkrecht zur optischen Achse eines Armes 18 des Mikroskopstrahlengangs ausgerichtet.

Im Scheitel des winkels, den die beiden Arme 16 und 18 miteinander einschließen, ist ein polarisierender Strahlteiler 19 angeordnet, dessen Teilerschicht um 45° gegen die Strahlungsrichtung in beiden Armen 16, 18 geneigt ist.

Weiterhin ist zwischen dem Strahlteiler 19 und dem adaptiven Spiegel 15 eine λ/4-Platte 20 sowie eine Zoomoptik 21 und zwischen dem Strahlteiler 19 und dem adaptiven Spiegel 17 eine λ/4-Platte 22 und eine Zoomoptik 23 vorhanden.

Schließlich ist eine Linse 24 vorgesehen, die die Aufgabe hat, die Ebenen der adaptiven Spiegel 15 und 17 in eine Pupillenebene 25 der Mikroskopanordnung abzubilden. Diese Aufgabe kann aber auch durch geeignete Auslegung gleichzeitig von der Zoomoptik 21 bzw. 23 übernommen werden, in welchem Fall die Linse 24 entfällt.

Beim Abtasten der Probe 3 läuft das Beleuchtungslicht 2 nach seiner Ablenkung im Strahlteiler 8 in Abhängigkeit seines Polarisationszustandes durch die Teilerschicht des Strahlteilers 19 hindurch zum adaptiven Spiegel 15 oder, abgelenkt von der Teilerschicht, zum adaptiven Spiegel 17 oder auch zu beiden adaptiven spiegeln 15, 17.

Dabei wird das Licht von dem adaptiven Spiegel 15 oder 17, auf den es jeweils trifft, wieder zum Strahlteiler 19 zurückreflektiert. Dadurch ist das Beleuchtungslicht, das jeweils auf den Strahlteiler 19 zurückläuft, nach Doppeldurchgang durch die λ/4-Platte 20 bzw. 22 jeweils orthogonal zum einfallenden Licht polarisiert. Demzufolge wird das Beleuchtungslicht über die Teilerschicht des Strahlteilers 19 wieder in den Mikroskopstrahlengang eingekoppelt und ist dann auf die Probe 3 gerichtet.

Diese Einkopplung erfolgt aufgrund der erfindungsgemäßen adaptiven Einrichtung, die sowohl die adaptiven Spiegel 15, 17, den polarisierenden Stahlteiler 19 als auch die λ/4-Platte 20, 22 umschließt, verlustfrei.

Das von der Probe 3 emittierte Licht durchläuft den Lichtweg über den Strahlteiler 19 bzw. die adaptiven Spiegel 15, 17 in umgekehrter Reihenfolge. Danach läuft das Detektionslicht in Abhängigkeit von seinem Polarisationszustand entweder von der Teilerschicht des Strahlteilers 19 abgelenkt zum adaptiven Spiegel 15 oder durch die Teilerschicht des Strahlteilers 19 hindurch zum adaptiven Spiegel 17 oder zu beiden adaptiven Spiegeln 15, 17. Auch hierbei wird das Detektionslicht von den adaptiven Spiegeln 15, 17 jeweils wieder zurückgeworfen und ist nach Doppeldurchgang durch die λ/4-Platten 20 bzw. 22 orthogonal zum ankommenden Detektionslicht polarisiert. Das bedeutet, daß das zum adaptiven Spiegel 15 kommende und zur Detektionseinrichtung 10 gelangende Licht orthogonal polarisiert ist zu dem Licht, das vom adaptiven Spiegel 17 kommt.

Davon ausgehend sind in der Detektionseinrichtung 10 ein polarisierender Strahlteiler 26 sowie zwei optoelektronische Wandler 27.1, 27.2 vorgesehen.

Damit ist es möglich, das von dem adaptiven Spiegel 15 kommende Detektionslicht mittels des optoelektronischen Wandlers 27.1 und das vom adaptiven Spiegel 17 kommende Detektionslicht mittels des optoelektronischen Wandlers 27.2 zu detektieren: D. h. an den Ausgängen der optoelektronischen Wandler 27.1, 27.2 liegen Signale an, die den adaptiven Spiegeln 15 bzw. 17 detektionsseitig getrennt zugeordnet sind.

Erfindungsgemäß ist nun weiterhin vorgesehen, daß das Ausgangssignal des optoelektronischen Wandlers 27.1 über eine Auswerte- und Stelleinrichtung, die zeichnerisch nicht dargestellt ist, mit dem adaptiven Spiegel 15 in Verbindung steht und der Ausgang des optoelektronischen Wandlers 27.2 ebenso über eine Auswerte- und Stelleinrichtung, die ebenfalls nicht dargestellt ist, mit dem adaptiven Spiegel 17 in Verbindung steht.

Außerdem sind auch die zoomeinrichtungen 21 und 23 mit der jeweils zugeordneten Auswerte- und Stelleinrichtung gekoppelt.

Mit der erfindungsgemäßen Anordnung ist es bei relativ geringem gerätetechnischen Aufwand mit hoher Effizienz möglich, die adaptive Optik zur schnellen Fokussierung oder zur Korrektur von Bildfehlern zu nutzen, die durch die optischen Baugruppen oder durch die zu untersuchende Probe verursacht sind. Die entsprechenden Verfahren sind weiter unten genauer erläutert.

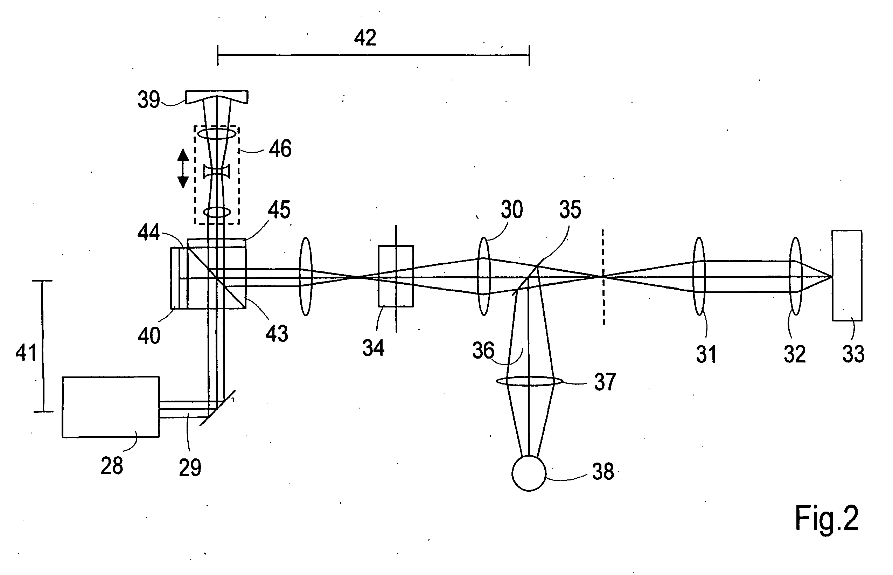

Nachfolgend soll anhand Fig.2 ein weiteres Ausführungsbeispiel beschrieben werden. Das von einer Beleuchtungsquelle 28 ausgehende Beleuchtungslicht 29 wird wiederum über eine Scannoptik 30, eine Tubuslinse 31 und das Mikroskopobjektiv 32 auf eine Probe 33 gerichtet. Mittels einer Scanneinrichtung 34 wird ein beugungsbegrenzter Spot in lateraler Richtung über die Probe 33 geführt und es werden dabei Bildinforinationen der Probe 33 gewonnen.

Das von der Probe 33 abgestrahlte Licht durchläuft in umgekehrter Richtung das Mikroskopobjektiv 32 und die Tubuslinse 31, wird mittels eines Strahlteilers 35 vom Beleuchtungsstrahlengang getrennt und ist dann als separater Detektionsstrahlengang 36 über eine Pinholeoptik 37 auf einen Detektor 38 gerichtet.

Erfindungsgemäß sind im Strahlengang des Beleuchtungslichtes 29 zwischen der Beleuchtungsquelle 28 und der Scanneinrichtung 34 ein adaptiver Spiegel 39 und ein herkömmlicher, nichtadaptiver Spiegel 40 vorgesehen und mit ihren Reflektorflächen jeweils senkrecht zu zwei Armen 41, 42 des Beleuchtungsstrahlengangs ausgerichtet. Dabei schließen die beiden Arme 41, 42 einen rechten Winkel ein, in dessen Scheitel sich die Teilerfläche eines polarisierenden Strahlteilers 43 befindet. Die Teilerfläche ist jeweils um 45° gegen die Strahlungsrichtung in den beiden Armen 41, 42 geneigt.

In den Strahlengang zwischen dem Strahlteiler 43 und dem Spiegel 40 ist weiterhin eine λ/4-Platte 44, im Strahlengang zwischen dem adaptiven Spiegel 39 und dem Strahlteiler 43 eine λ/4-Platte 45 sowie eine Zoomoptik 46 eingeordnet.

Beim Betreiben dieser Mikroskopanordnung läuft analog zum vorhergehenden Ausführungsbeispiel das Beleuchtungslicht 29 in Abhängigkeit von seinem Polarisationszustand durch die Teilerfläche des Strahlteilers 43 hindurch über die λ/4-Platte 45 und die Zoomoptik 46 zum adaptiven Spiegel 39 und wird von diesem über denselben Weg zurückreflektiert zur Teilerfläche des Strahlteilers 43. Von der Teilerfläche erfolgt eine Ablenkung zur Probe 33 hin, da das Beleuchtungslicht 26 nach Doppeldurchgang durch die λ/4-Platte 45 nun orthogonal zum einfallenden Beleuchtungslicht 26 polarisiert ist.

Bei abweichender Polarisation wird das Beleuchtungslicht 26 zunächst von der Teilerschicht des Strahlteilers 43 zum Spiegel 40 hin abgelenkt und von diesem auf die Teilerschicht zurückreflektiert, durchläuft dabei zweimal die λ/4-Platte 44 und hat nach dem Doppeldurchgang durch die λ/4-Platte 44 eine gegenüber dem einfallenden Beleuchtungslicht 26 orthogonale Polarisationsrichtung, was zur Folge hat, daß das Beleuchtungslicht nunmehr durch die Teilerschicht hindurch zur Probe 33 gelangt.

Das von der Probe 33 abgestrahlte Licht erreicht auf dem bereits beschriebenen weg den Detektor 38, der über eine nicht dargestellte Auswerte- und Stelleinrichtung mit dem adaptiven Spiegel 39 und/oder mit der Zoomeinrichtung 46 in Verbindung steht. Die Verfahrensweise bei der Nutzung dieser Anordnung zur Bildgewinnung wird weiter unten genauer erläutert.

Die Stellsignale, die in der Auswerteeinrichtung für die Zoomoptik 46 generiert werden, können dazu dienen, die Strahlaufweitung optimal an das Mikroskopobjektiv anzupassen.

$$R = \frac{A_{Pupille} - A_{HT}}{A_{Pupille}} = \frac{r_{Pupille}^{2} - r_{HT}^{2}}{r_{Pupille}^{2}}$$

Nachfolgend soll nun die Arbeitsweise der erfindungsgemäßen Anordnung für die unterschiedlichen Betriebsweisen eines konfokalen Laserscanningmikroskops beschrieben werden. Zu dieser Beschreibung soll lediglich das Ausführungsbeispiel nach Fig.1 dienen. Die Anordnungen nach den übrigen Ausführungsbeispielen können sinngemäß angewendet werden.

### Reflexionsmikroskopie

In dieser Betriebsart wird das von der Probe 3 gestreute oder reflektierte Licht zur Bildgebung verwendet.

In den Fällen, in denen die Probe 3 nicht doppelbrechend wirkt oder ein ausgeprägt von der Polarisation abhängiges Reflexionsvermögen hat, kann folgendermaßen verfahren werden. Die Polarisation des Beleuchtungslichtes ist derart orientiert, daß Licht gleicher Intensität auf die adaptiven Spiegel 15 und 17 trifft. Im Detektionsstrahlengang 9 trifft das von der Probe reflektierte Licht beim Passieren der beiden Arme 16 und 18 wiederum auf die adaptiven Spiegel 15 und 17, wobei das Licht, das auf den Wandler 27.1 trifft, sowohl anregungs- als auch detektionsseitig vom adaptiven Spiegel 15 reflektiert worden ist und das Licht, das zum Wandler 27.2 gelangt, sowohl anregungs- als auch detektionsseitig vom adaptiven Spiegel 17 reflektiert worden ist.

Dabei verursachen Aberrationen, die durch Defokussierung, durch die Probe oder durch optische Elemente verursacht werden, daß an den Detektoren in der konfokalen Anordnung eine geringere Lichtintensität registriert wird, als im Fall der aberrationsfreien Abbildung. Dabei kann das Empfangssignal sowohl hinsichtlich eines speziellen Punktes in der Probe oder als Durchschnittswert über eine vorgegebene Scannfläche auf der Probe ausgewertet werden. Werden nun die Geometrien der Spiegelflächen der adaptiven Spiegel 15 und 17 verändert und dabei die Auswirkungen auf das Empfangssignal gemessen, so kann in Abhängigkeit vom Meßergebnis eine Spiegelgeometrie gefunden und eingestellt werden, bei der ein optimales Empfangssignal vorliegt und damit das optische System hinsichtlich der Aberrationen korrigiert ist.

In einer bevorzugten Arbeitsweise wird die geometrische Form der Spiegelfläche der adaptiven Spiegel 15 und 17 unter Nutzung von Zernikepolynomen variiert. Dabei bestimmen die Entwicklungskoeffizienten ($z_1$, $z_2$, ...$z_i$...$z_N$) in eindeutiger Weise die Form der Spiegelfläche. Es kann in der vorliegenden Anordnung mit einer Messung der Gradient der Intensität des Empfangssignals im Hinblick auf einen Zernikekoeffizient $\partial I/\partial z_i \approx \Delta I/\Delta z_i$ erhalten werden, indem eine Spiegelform ($z_1$, $z_2$, ...$z_i+\Delta z_i$...$z_N$) beim adaptiven Spiegel 15 und eine Spiegelform ($z_1$, $z_2$, ...$z_i$...$z_N$) beim adaptiven Spiegel 17 eingestellt wird.

Der normalisierte Gradient ergibt sich aus $\text{grad}_i = (I_i^{Dell} - I_i^{Del2})/\Delta z_i *2/(I_i^{Dell} + I_i^{Del2})$, wobei $I_i^{Dell}$ und $I_i^{Del2}$ die von den optoelektronischen Wandlern 27.1 und 27.2 gemessenen Intensitätswerte sind.

Diese Messung wird für alle interessanten Koeffizienten ausgeführt. Die neuen Spiegelform ergibt sich von den Gradienten aus ($z_1'$, $z_2'$,... $z_N'$) = ($z_1+(\Delta z_1)^2\text{grad}_1$, $z_2+ (\Delta z_2)^2\text{grad}_2$, ... $z_N+(\Delta z_N)^2\text{grad}_N$)), d. h. jeder neue Koeffizient ist als $z_i' = z_i+(\Delta z_i)^2\text{grad}_i$ gegeben.

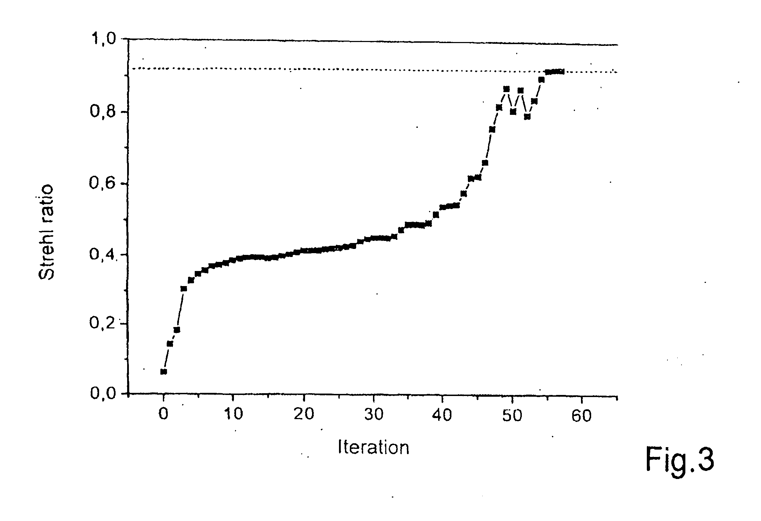

Diese Verfahrensweise wird so oft wiederholt, bis ein bestimmtes Korrekturkriterium erfüllt ist. Die Schrittgröße $\Delta z_i$ kann dabei geeigneterweise angepaßt werden. Beispielhaft zeigt Fig.3 den oben beschriebenen Iterationsprozeß für die Abbildung in 200 $\mu$m Tiefe innerhalb einer biologischen Probe mit einem wasserimmersionsobjektiv mit NA = 1.2 bei einer Wellenlänge von 488 nm.

Die Unterschiede des Brechungsindex zwischen der Probe und der Wasserimmersionsschicht beträgt 1,38-1,33=0,05, was aberrationsbedingt zu einem Strehlverhältnis von 0,06 (gemessene Intensität dividiert durch die Intensität in einem aberrationsfreien Fall) führt. Nach etwa sechzig Iterationen der obigen Art unter Einbeziehung der ersten und zweiten Ordnung sphärischer Aberration ist das Optimum der Korrektur erreicht, welches zu einem Strehlverhältnis von 0,92 führt.

Für weitergehende Korrekturen müssen zusätzliche Zerniketerme einbezogen werden. Dabei werden in jedem Iterationsschritt die Gradienten für die genutzten Koeffizienten gemessen und beeinflussen die Spiegelgeometrie wie bereits dargelegt.

Beginnt man die Optimierung mit einer vorab geschätzten Korrektur ergibt sich eine beträchtliche Beschleunigung des Iterationsprozesses. Dabei kann auch mit etwa sechzig Iterationen das Optimum der Korrektur in weniger als 0,3 s bei einer Arbeitsfrequenz der Spiegelverstellung, von 0,5 kHz erreicht werden.

Es ist selbstverständlich, daß die Einzelheiten des Iterätionsprozesses in einfacher Weise modifiziert werden können. Die vorgenannte Beschreibung ist lediglich eine Ausführungsvariante solch eines Verfahrens. Prinzipiell können Optimierungsmethoden unterschiedlicher Art genutzt werden.

In den Fällen, in denen die Probe doppelbrechend wirkt oder ihr Reflexionsvermögen stark von der Polarisation abhängig ist, ist es erforderlich, identische Einstellungen für die adaptiven Spiegel 15 und 17 zu nutzen. Werden die Empfangswerte der Wandler 27.1 und 27.2 addiert, ist der polarisationsabhängige Effekt der Probe eliminiert. Nun sind für jeden Koeffizienten zwei Messungen (mit Spiegelposition wie beschrieben ($z_1$, $z_2$, ... $z_i$...$z_N$) und ($z_1$,. $z_2$, ...$z_i+\Delta z_i/4$ ...$z_N$)) erforderlich, um einen lokalen Gradienten zu erhalten. Zugleich kann die Differenz der Empfangssignale genutzt werden für polarisationsempfindliche Messungen.

Eine spezielle Form des Phasenkontrastes ist der "Differential Interference Contrast" (DIC). Mit der erfindungsgemäßen Anordnung kann dieses Kontrastverfahren in einfacher Weise implementiert werden. In diesen Fall wird das Beleuchtungslicht zwischen den adaptiven Spiegeln 15 und 17 in gleicher Intensität aufgeteilt. Die beiden adaptiven Spiegel werden dazu genutzt, den Strahl der einen Polarisation gegenüber dem Strahl der anderen Polarisation zu verkippen. Die Separierung der Beleuchtungsspots der beiden Strahlen und ihre Orientierung auf der Probe kann direkt durch die adaptiven Spiegel 15 und 17 beeinflußt werden. Die Strahlengänge werden im Detektionsstrahlengang automatisch beim Passieren der adaptiven Spiegel 15 und 17 korrigiert, d. h. auf dem Detektor zur Deckung gebracht. Wird ein Polarisator mit einer Neigung der Achse von 45° zur Polarisationsrichtung der beiden Strahlen vor dem Detektor genutzt, so ergibt sich eine Interferenz der zwei Strahlen auf den Wandlern 27.1 und 27.2, die konfokal oder nicht konfokal detektiert werden kann.

**Fluoreszenzmikroskopie**

In dieser Betriebsart wird durch das Beleuchtungslicht Fluoreszenz in der Probe angeregt, die zur Bildgebung verwendet wird.

Hinsichtlich der Fluoreszenzanregung insbesondere in biologischen Proben ist die Polarisation des Lichtes von untergeordneter Bedeutung. Typischerweise kann die Probe mit linear polarisiertem Licht angeregt werden, das beispielsweise von dem adaptiven Spiegel 15 kommt. Die Fluoreszenzstrahlung ist im allgemeinen unpolarisiert und wird am Strahlteiler 19 aufgeteilt.

Es kann die gleiche Verfahrensweise, wie bereits anhand der Reflexionsmikroskopie dargelegt, genutzt werden, um die Gradienten der Strahlungsintensität und damit die Richtung der Optimierung der Spiegelgeometrie mit einer Messung zu erhalten. Dabei erfolgt nun nur detektionsseitig die Korrektur mit verschiedenen Spiegelstellungen, die für die Gradientenbestimmung erforderlich ist, da das Anregungslicht über ein adaptives Element läuft.

Die Bildgebung erfolgt verlustfrei mit identischer, optimierter Stellung der Spiegel 15 und 17, wobei die Signale der Wandler 27.1 und 27.2 addiert werden.

Um unterschiedliche Korrekturen im Beleuchtungsstrahlengang und im Detektionsstrahlengang vornehmen zu können, kann wie folgt verfahren werden. Dabei wird die Probe wiederum mit linear polarisiertem Licht angeregt, das beispielsweise vom adaptiven Spiegel 15 kommt. So kann das vom Wandler 27.2 empfangene Signal zur Optimierung der Spiegelgeometrie des adaptiven Spiegels 17 unabhängig vom Empfangssignal des Wandlers 27.1 zur Optimierung der Spiegelform des adaptiven Spiegels 15 genutzt werden, wobei nun zwei Messungen mit jeweils einer neuen Spiegelstellung erforderlich sind, um einen Gradienten zu bestimmen.

Die Bildgebung erfolgt mit den so optimierten Spiegelstellungen, wobei das Anregungslicht über Spiegel 15 und das Detektionslicht über Spiegel 17 läuft.

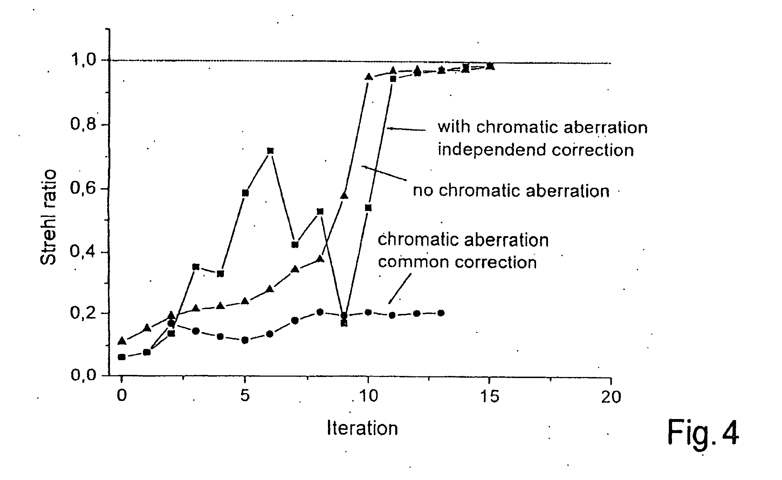

Fig.4 zeigt ein Beispiel für die Korrektur bei der Abbildung einer biologischen Probe in 50 $\mu$m Tiefe mit einem Wasserimmersionsobjektiv mit einer NA = 1,2. Die Anregungswellenlänge ist dabei 488 nm, die Fluoreszenzwellenlänge beträgt 550 nm. Die Abweichung des Brechungsindex der Probe vom Brechungsindex der Wasserimmersionsschicht beträgt 1,38 - 1,33 = 0,05 und führt zu einem Strehlverhältnis von 0,11 ohne chromatische Aberration des optischen Systems. Mit chromatischer Aberration (primär chromatischer Längsfehler des fokussierenden Mikroskopobjektivs) die einer Fokusänderung von etwa 0,6 $\mu$m der Fluoreszenzstrahlung im Vergleich zur Anregungsstrahlung entspricht, fällt das Strehlverhältnis weiter auf etwa 0,06.

Ohne chromatische Aberrationen wird die optimale Korrektur unter Berücksichtigung der ersten und zweiten Ordnung sphärischer Aberration innerhalb von etwa 15 Iterationen erreicht. Mit chromatischer Aberration und optimaler identischer Korrektur im Anregungs- und Fluoreszenzstrahlengang beträgt das optimierte Strehlverhältnis lediglich 0,2. Bei einer unabhängigen Korrektur im Anregungs- und Fluoreszenzstrahlengang, die mit der hier vorliegenden Erfindung ausgeführt werden kann, läßt sich trotz chromatischer Aberration ein Strehlverhältnis von 0,99 erzielen.

### Lasermikroskopie bei nichtlinearer Anregung

Bei nichtlinearer Anregung (muli-photon excited fluorescence, higher-harmonics generation) wird eine der konfokalen Detektion äquivalente Auflösung ohne Nutzung eines Pinholes zur Detektion erreicht. Wird kein Pinhole genutzt, so ist die Korrektur von Bildfehlern lediglich im Beleuchtungsstrahlengang erforderlich.

In diesem Falle kann beispielsweise der adaptive Spiegel 17 ersetzt werden durch einen nichtadaptiven Spiegel und eine $\lambda$/4-Platte, wie bereits anhand von Fig.2 erläutert. Das Empfangssignal vom Detektor 38 wird dann direkt zur Optimierung der Spiegelgeometrie des adaptiven Spiegels 39 in der beschriebenen Weise genutzt, wobei wiederum zwei Messungen (Spiegelstellungen) erforderlich sind um einen Gradienten zu bestimmen.

Wird ein Pinhole genutzt um die Auflösung weiter zu steigern, ist die Korrektur im Detektionsstrahlengang von Bedeutung und kann im Falle der Fluoreszenz erreicht werden wie weiter oben bei der Fluoreszenzmikroskopie beschrieben und anhand Fig.1 dargelegt. Insbesondere ist eine unabhängige Korrektur im Beleuchtungs- und Detektionsstrahlengang auf diese Weise möglich. Aufgrund der typischerweise großen Differenz zwischen den Wellenlängen der Anregungs- und der Fluoreszenzstrahlung ist eine solche unabhängige Korrektur erforderlich, um die Benutzung eines Pinholes zu ermöglichen.

Ein Vorteil der hier beschriebenen iterativen Regelung der adaptiven Optik ist, daß die aktuelle wellenfrontformung durch die adaptiven Elemente nicht exakt bekannt sein muß, da eine Signaloptimierung mittels eines Variationsverfahrens iterativ erreicht wird. Aufgrund der Notwendigkeit des Durchlaufens verschiedener adaptiver Stellungen (Iterationen) pro Optimierung ist zu beachten, daß während der Optimierung Bewegungen der Probe, Ausbleichen oder Schäden der Probe auftreten können. Das Bleichen oder Schädigen der Probe kann durch Reduzierung der Intensität der Beleuchtungsstrahlung minimiert werden, da in der erfindungsgemäßen Lösung für die adaptive Korrektur dieselbe Detektionsempfindlichkeit genutzt wird wie für die Bildgewinnung.

Während des iterativen Prozesses zur adaptiven Korrektur erlaubt die zunehmende Verbesserung des Empfangssignals die weitere Reduzierung der Beleuchtungsintensität. Eine geeignet gewählte Anfangsposition des adaptiven Elementes ermöglicht es, die Anzahl der Iterationen während des Prozeßablaufs zu reduzieren und infolge dessen auch weniger Energie in die Probe einzubringen.

Für die Optimierung selbst spielen die genannten Prozesse eine untergeordnete Rolle, da ein Gradient jeweils bezogen auf den aktuellen Zustand der Probe ermittelt und zur Steuerung des Optimierungsprozesses benutzt wird.

Relativbewegungen von Probe und optischem System können auch korrigiert werden, wenn ein geringer, aber strukturierter Teil der Probe während der Optimierung gescannt wird. Dabei kann die Bildinformation zur Korrektur der Bewegung der Probe (z. B. durch Cross-Correlation) genutzt werden.

Die Bewegungskorrektur wird mittels der adaptiven Spiegel erreicht, indem um einen angemessenen Betrag defokussiert wird, und/oder mittels der Scanneinrichtung 7 bzw. 34 der Mikroskopanordnung. Die Möglichkeit der Korrektur schneller Bewegungen der Probe ist eine weitere Anwendungsmöglichkeit der adaptiven Optik für die Bilderfassung im allgemeinen. Die elektronische Analyse aufeinander folgender Bilder (z. B. hinsichtlich der Verbesserung des Kontrastes bei hohen Frequenzen) ist eine weitere Option für die Bewertung des Korrekturprozesses mittels der adaptiven Spiegel.

**Bezugszeichenliste**

| | |
|---|---|
| 1 | Beleuchtungsquelle |
| 2 | Beleuchtungslicht |
| 3 | Probe |
| 4 | Scannoptik |
| 5 | Tubuslinse |
| 6 | Mikroskopobjektiv |
| 7 | Scanneinrichtung |
| 8 | Strahlteiler |
| 9 | Detektionsstrahlengang |
| 10 | Detektionseinrichtung |
| 11 | Pinholeoptik |
| 12 | Pinhole |
| 13 | Kollimationsoptik |
| 14 | Wellenlängenfilter |
| 15 | adaptiver Spiegel |
| 16 | Arm |
| 17 | adaptiver Spiegel |
| 18 | Arm |
| 19 | Strahlteiler |
| 20. | λ/4-Platte |
| 21 | Zoomoptik |
| 22 | λ/4-Platte |
| 23 | Zoomoptik |
| 24 | Linse |
| 25 | Pupillenebene |
| 26 | Strahlteiler |
| 27.1, 27.2 | Wandler |
| 28 | Beleuchtungsquelle |
| 29 | Beleuchtungslicht |
| 29 | Beleuchtungslicht |
| 30 | Scannoptik |
| 31 | Tubuslinse |
| 32 | Mikroskopobjektiv |
| 33 | Probe |
| 34 | Scanneinrichtung |
| 35 | Strahlteiler |
| 36 | Detektionsstrahlengang |
| 37 | Pinholeoptik |
| 38 | Detektor |
| 39 | adaptiver Spiegel |
| 40 | nichtadaptiver Spiegel |
| 41, 42 | Arm |
| 43 | Strahlteiler |
| 44, 45 | λ/4-Platte |
| 46 | Zoomoptik |

**Patentansprüche**

1. Mikroskop, insbesondere Laserscanningmikroskop, mit einem Strahlengang, der zwei zueinander orthogonale Arme (16, 18) aufweist, oder mit einem gefalteten Strahlengang, der zwei zueinander orthogonale Teile aufweist, umfassend

   - zwei reflektive Elemente (15, 17), die als adaptive optische Elemente (15, 17) ausgebildet sind,
   - einen Strahlteiler (19), der eine Teilerschicht aufweist, die sich im Scheitel eines Winkels, den die zueinander orthogonalen Arme (16, 18) des Mikroskopstrahlengangs einschließen, oder der beiden orthogonaler Teile des gefalteten Strahlengangs des Mikroskops befindet, sowie
   - eine Detektionseinrichtung (10), auf welche von einer mit dem Mikroskop untersuchten Probe (3) kommendes Detektionslicht gerichtet ist und die über wenigstens eine Auswerte- und Stelleinrichtung mit den adaptiven reflektiven Elementen (15, 17) verbunden ist, und
   - eine Beleuchtungsquelle (1) zur Beleuchtung der Probe (3), **dadurch gekennzeichnet, daß**
   - der Strahlteiler (19) polarisierend ist,
   - in den Strahlengängen zwischen dem Strahlteiler (19) und den adaptiven reflektiven Elementen (15, 17) jeweils eine λ/4-Platte (20, 22) angeordnet ist, und
   - die reflektiven Elemente (15, 17) so angeordnet sind, daß
   - in dem einen Arm (16) das von der Beleuchtungsquelle (1) des Mikroskops kommende und in den Strahlteiler (19) eintretende Licht in Abhängigkeit von seinem Polarisationszustand

      - durch die Teilerschicht und eine der λ/4-Platten (20) hindurch zu einem ersten der reflektiven Elemente (15, 17) läuft, von dort auf die Teilerschicht zurückreflektiert und von dieser zu einem Mikroskopobjektiv (6) umgelenkt wird, und/oder
      - von der Teilerschicht umgelenkt wird und nach Durchgang durch eine λ/4-Platte (22) auf das zweite reflektive Element (17) trifft, von diesem zur Teilerschicht zurückreflektiert wird und durch diese hindurch zum Mikroskopobjektiv (6) gelangt, und

   - in dem anderen Arm (18) das von der Probe (3) kommende Detektionslicht in Abhängigkeit von seinem Polarisationszustand

      - durch die Teilerschicht und eine λ/4-Platte (22) hindurch auf das zweite reflektive Element (17) trifft, von dort zur Teilerschicht zurückreflektiert und von dieser zur Detektionseinrichtung (10) umgelenkt wird, und/oder

- von der Teilerschicht umgelenkt wird und nach Durchgang durch eine λ/4-Platte (20) auf das erste reflektive Element (15) trifft, vom diesem zur Teilerschicht zurückreflektiert wird und durch diese hindurch zur Detektionseinrichtung (10) gelangt, und

- die Detektionseinrichtung (10) einen zweiten polarisierenden Strahlteiler (26) sowie zwei optoelektronische Wandler (27.1, 27.2) aufweist, wobei das Detektionslicht in Abhängigkeit von seinem Polarisationszustand durch den zweiten Strahlteiler (26) hindurchtretend oder von dessen Teilerschicht umgelenkt zu dem einen oder anderen optoelektronischen Wandler (27.1, 27.2) gelangt.

2. Mikroskop nach Anspruch 1, **dadurch gekennzeichnet, daß** zwischen dem Strahlteiler (19) und der Detektionseinrichtung (10) eine Pinholeoptik (11) zur Fokussierung des Detektionslichtes auf ein Pinhole (12) sowie eine Linse (13) zur Kollimierung des Detektionslichtes vorgesehen sind.

3. Mikroskop, insbesondere Laserscanningmikroskop, mit einem Strahlengang, der zwei zueinander orthogonale Arme (41, 42) aufweist, oder mit einem gefalteten Strahlengang, der zwei zueinander orthogonale Teile aufweist, umfassend

- zwei reflektive Elemente (39, 40), von denen eines als adaptives optisches Element (39) ausgebildet ist,
- einen Strahlteiler (43), der eine Teilerschicht aufweist, die sich im Scheitel eines Winkels, den die zueinander orthogonalen Arme (41, 42) des Mikroskopstranlengangs einschließen, oder der beiden orthogonaler Teile des gefalteten Strahlengangs des Mikroskops befindet, sowie
- eine Detektionseinrichtung (38), auf welche von einer mit dem Mikroskop untersuchten Probe (33) kommendes Detektionslicht gerichtet ist und die über wenigstens eine Auswerte- und Stelleinrichtung mit dem adaptiven reflektiven Element 39) verbunden ist, und
- eine Beleuchtungsquelle (28) zur Beleuchtung der Probe (3),

**dadurch gekennzeichnet, daß**

- der Strahlteiler (43) polarisierend ist,
- in den Strahlengängen zwischen dem Strahlteiler (43) und den reflektiven Elementen (39, 40) jeweils eine λ/4-Platte (44, 45) angeordnet ist, und
- die reflektiven Elemente (39, 40) so angeordnet sind, daß

- in dem einen Arm (41) das von der Beleuchtungsquelle (28) des Mikroskops kommende Licht in Abhängigkeit von seinem Polarisationszustand

- durch die Teilerschicht und die im Strahlengang zwischen dem Strahlteiler (43) und dem adaptiven reflektiven Element (39) angeordnete λ/4-Platte (45) hindurch auf das adaptive reflektive Element (39) trifft, von einer Reflektorfläche des adaptiven reflektiven Elements (39) zur Teilerschicht zurückreflektiert und von dieser in den anderen Arm (42) zu einem Mikroskopobjektiv (32) des Mikroskops hin umgelenkt wird und/oder

- von der Teilerschicht in Richtung des reflektiven nichtadaptiven Elements (40) umgelenkt und nach Durchgang durch die im Strahlengang zwischen dem Strahlteiler (43) und dem nichtadaptiven reflektiven Element (40) angeordnete λ/4-Platte (44) von dem reflektiven nichtadaptiven Element (40) zur Teilerschicht zurückreflektiert wird und durch diese hindurch durch den Anderen Arm (42) zum Mikroskopobjektiv (32) gelangt,

- in dem anderen Arm (42) das von der Probe (33) durch das Mikroskopobjektiv (32) kommende Licht auf eine Detektionseinrichtung (38) gerichtet wird.

4. Mikroskop nach einem der vorgenannten Ansprüche, **dadurch gekennzeichnet, daß** die reflektiven Elemente (15, 17; 39, 40) jeweils eine Reflektorfläche aufweisen, die senkrecht zu dem Strahlengang zwischen der Teilerschicht und dem jeweiligen reflektiven Element (15, 17; 39, 40) ausgerichtet ist.

5. Mikroskop nach einem der vorgenannten Ansprüche, **dadurch gekennzeichnet, daß** die adaptiven Elemente (15, 17; 39) jeweils in einer Pupillenebene des Mikroskopstrahlengangs positioniert sind und im Strahlengang zwischen dem Strahlteiler (19; 43) und dem Mikroskopobjektiv (6; 32) eine Optik (24) zur Abbildung der Ebene der adaptiven Elemente (15, 17; 39) in eine Pupillenebene des Mikroskops vorhanden ist.

6. Laserscanningmikroskop nach Anspruch 7, **dadurch gekennzeichnet, daß** es als Laserscanningmikroskop ausgebildet ist und eine Scanneinrichtung (7; 34) besitzt, und daß die Pupillenebene mit einer reflektierenden Fläche der Scanneinrichtung identisch ist und eine Scannoptik des Mikroskops, das Mikroskopobjektiv (6; 32) sowie eine Tubuslinse (5; 31) so zueinander positioniert sind, daß in der Probe (3; 33) ein beugungsbegrenzter Spot erzeugt wird, der aufgrund der Scannbewegung in lateraler Richtung über die Probe (3; 33) geführt wird.

**7.** Mikroskop nach einem der vorgenannten Ansprüche, **dadurch gekennzeichnet, daß** als adaptive Elemente (15, 17; 39) Spiegel mit segmentiert verstellbarer Spiegelfläche, Membranspiegel oder reflektive Spatial Light Modulatoren vorgesehen sind.

**8.** Mikroskop nach einem der vorgenannten Ansprüche, **dadurch gekennzeichnet, daß** mindestens einem der adaptiven Elemente (15, 17; 39) eine Zoomoptik (21, 23; 46) zugeordnet ist, die der Anpassung der Apertur dieses adaptiven Elements (15, 17; 39) an die Apertur des Mikroskopobjektivs (6; 32) dient.

**Claims**

**1.** Microscope, in particular a laser scanning microscope, having a beam path which comprises two mutually orthogonal arms (16, 18), or having a folded beam path which comprises two mutually orthogonal portions, comprising

- two reflective elements (15, 17) which are formed as adaptive optical elements (15, 17),
- a beam splitter (19) which comprises a splitter layer which is located in the vertex of an angle enclosed by the mutually orthogonal arms (16, 18) of the microscope beam path, or of the two orthogonal portions of the folded beam path of the microscope, and
- a detection device (10), to which detection light, which comes from a sample (3) examined by the microscope, is directed and which is connected to the adaptive reflective elements (15, 17) via at least one evaluating and adjusting device, and
- an illumination source (1) for illuminating the sample (3),

**characterised in that**

- the beam splitter (19) is polarising,
- a λ/4-plate (20, 22) is arranged in each case in the beam paths between the beam splitter (19) and the adaptive reflective elements (15, 17), and
- the reflective elements (15, 17) are arranged in such a manner that
- in one arm (16), the light coming from the illumination source (1) of the microscope and entering the beam splitter (19), in dependence upon its polarisation state,
- passes through the splitter layer and one of the λ/4-plates (20) to a first one of the reflective elements (15, 17), from where it is reflected back to the splitter layer and is deflected thereby to a microscope objective (6), and/or

- is deflected by the splitter layer and, after passing through a λ/4-plate (22), impinges upon the second reflective element (17), is reflected back thereby to the splitter layer and passes therethrough to the microscope objective (6), and
- in the other arm (18), the detection light coming from the sample (3), depending upon its polarisation state,
- passes through the splitter layer and a λ/4-plate (22) to the second reflective element (17), from where it is reflected back to the splitter layer and is deflected thereby to the detection device (10), and/or
- is deflected by the splitter layer and, after passing through a λ/4-plate (20), impinges upon the first reflective element (15), is reflected back thereby to the splitter layer and passes therethrough to the detection device (10), and
- the detection device (10) has a second polarising beam splitter (26) and two optoelectronic converters (27.1, 27.2), wherein, in dependence upon its polarisation state, the detection light passes through the second beam splitter (26) or is deflected by the splitter layer thereof to the one or other optoelectronic converter (27.1, 27.2).

**2.** Microscope as claimed in claim 1, **characterised in that** pinhole optics (11) for focussing the detection light on to a pinhole (12) and a lens (13) for collimating the detection light are provided between the beam splitter (19) and the detection device (10).

**3.** Microscope, in particular a laser scanning microscope, having a beam path which comprises two mutually orthogonal arms (41, 42), or having a folded beam path which comprises two mutually orthogonal portions, comprising

- two reflective elements (39, 40), of which one is formed as an adaptive optical element (39),
- a beam splitter (43) which comprises a splitter layer which is located in the vertex of an angle enclosed by the mutually orthogonal arms (41, 42) of the microscope beam path, or of the two orthogonal portions of the folded beam path of the microscope, and
- a detection device (38), to which detection light, which comes from a sample (3) examined by the microscope, is directed and which is connected to the adaptive reflective element (39) via at least one evaluating and adjusting device, and
- an illumination source (28) for illuminating the sample (3),

**characterised in that**

- the beam splitter (43) is polarising,
- a λ/4-plate (44, 45) is arranged in each case in the beam paths between the beam splitter (43) and the reflective elements (39, 40), and
- the reflective elements (39, 40) are arranged in such a manner that
- in one arm (41), the light coming from the illumination source (28) of the microscope, in dependence upon its polarisation state,
- passes through the splitter layer and the λ/4-plate (45), which is arranged in the beam path between the beam splitter (43) and the adaptive reflective element (39), so as to impinge upon the adaptive reflective element (39), is reflected back by a reflector surface of the adaptive reflective element (39) to the splitter layer and is deflected thereby in the other arm (42) towards a microscope objective (32) of the microscope, and/or
- is deflected by the splitter layer in the direction of the reflective non-adaptive element (40) and, after passing through the λ/4-plate (44), which is arranged in the beam path between the beam splitter (43) and the non-adaptive reflective element (40), is reflected back by the reflective non-adaptive element (40) to the splitter layer and passes therethrough through the other arm (42) to the microscope objective (32)
- in the other arm (42), the light coming from the sample (33) through the microscope objective (32) is directed to a detection device (38).

4. Microscope as claimed in any one of the preceding claims, **characterised in that** the reflective elements (15, 17; 39, 40) each comprise a reflector surface which is aligned perpendicular to the beam path between the splitter layer and the respective reflective element (15, 17; 39, 40).

5. Microscope as claimed in any one of the preceding claims, **characterised in that** the adaptive elements (15, 17; 39) are each positioned in a pupil plane of the microscope beam path, and optics (24) are provided in the beam path between the beam splitter (19; 43) and the microscope objective (6; 32) for imaging the plane of the adaptive elements (15, 17; 39) into a pupil plane of the microscope.

6. Laser scanning microscope as claimed in claim 7 [sic], **characterised in that** it is formed as a laser scanning microscope and comprises a scanning device (7; 34) and that the pupil plane is identical to a reflective surface of the scanning device and scanning optics of the microscope, the microscope objective (6; 32) and a tube lens (5; 31) are positioned relative to one another in such a manner that in the sample (3; 33) a diffraction-limited spot is generated which is guided over the sample (3; 33) in a lateral direction by reason of the scanning movement.

7. Microscope as claimed in any one of the preceding claims, **characterised in that** mirrors with mirror surfaces which are adjustable in segments, diaphragm mirrors or reflective spatial light modulators are provided as adaptive elements (15, 17; 39).

8. Microscope as claimed in any one of the preceding claims, **characterised in that** zoom optics (21, 23; 46) are allocated to at least one of the adaptive elements (15, 17; 39) and serve to adapt the aperture of this adaptive element (15, 17; 39) to the aperture of the microscope objective (6; 32).

**Revendications**

1. Microscope, en particulier microscope à balayage laser, avec un trajet des rayons qui comporte deux bras (16, 18) orthogonaux l'un par rapport à l'autre, ou avec un trajet des rayons replié qui comporte deux parties orthogonales l'une par rapport à l'autre, comprenant

- deux éléments réfléchissants (15, 17) qui sont configurés comme éléments optiques adaptatifs (15, 17),
- un diviseur de rayon (19) qui comporte une couche de division qui se trouve à l'origine d'un angle que limitent les bras (16, 18), orthogonaux l'un à l'autre, du trajet des rayons dans le microscope, ou des deux parties orthogonales l'une à l'autre du trajet des rayons replié du microscope ; ainsi que
- un dispositif de détection (10), sur lequel est dirigée la lumière de détection venant d'un échantillon (3) examiné avec le microscope et qui est relié par l'intermédiaire d'au moins un dispositif de dépouillement et de positionnement aux éléments réfléchissants adaptatifs (15, 17) et
- une source d'éclairage (1) pour l'éclairage de l'échantillon (3),

**caractérisé en ce que**

- le diviseur de rayon (19) est polarisant,
- dans les trajets de rayon entre le diviseur de rayon (19) et les éléments réfléchissants adaptatifs (15, 17) est disposée respectivement une plaque λ/4 (20, 22), et
- les éléments réfléchissants (15, 17) sont disposés de telle sorte que

- dans l'un des bras (16), la lumière arrivant de la source d'éclairage (1) du microscope et entrant dans le diviseur de rayon (19), en fonction de son état de polarisation,

- va à travers la couche de division et une des plaques λ/4 (20) vers un premier des éléments réfléchissants (15, 17), est réfléchie de là sur la couche de division et est renvoyée de celle-ci à un objectif du microscope (6) et/ou

- est renvoyée par la couche de division et, après passage à travers une plaque λ/4 (22), rencontre le deuxième élément réfléchissant (17), est réfléchie de ce dernier vers la couche de division et accède à travers cette dernière à l'objectif du microscope (6), et

- dans l'autre bras (18), la lumière de détection venant de l'échantillon (3), en fonction de son état de polarisation

- rencontre le deuxième élément réfléchissant (17) à travers la couche de division et une plaque λ/4 (22), est réfléchie de là vers la couche de division et est renvoyée par cette dernière vers le dispositif de détection (10) et/ou

- est renvoyée par la couche de division et, après passage à travers une plaque λ/4 (20), rencontre le premier élément réfléchissant (15), est réfléchie par ce dernier vers la couche de division et accède à travers cette dernière au dispositif de détection (10), et

- le dispositif de détection (10) comporte un deuxième diviseur de rayon polarisant (26) ainsi que deux convertisseurs optoélectroniques (27.1, 27.2), sachant que la lumière de détection, en fonction de son état de polarisation, traverse le deuxième diviseur de rayon (26) ou est renvoyée par sa couche de division, et accède à l'un ou l'autre des deux convertisseurs optoélectroniques (27.1, 27.2).

2. Microscope selon la revendication 1, **caractérisé en ce qu'**entre le diviseur de rayon (19) et le dispositif de détection (10), il est prévu une optique « pin hole » (11) pour la focalisation de la lumière de détection sur un pin hole (12) ainsi qu'une lentille (13) pour la collimation de la lumière de détection.

3. Microscope, en particulier microscope à balayage laser, avec un trajet des rayons, qui comporte deux bras (41, 42) orthogonaux l'un par rapport à l'autre, ou avec un trajet des rayons replié qui comporte deux parties orthogonales l'une par rapport à l'autre, comprenant

- deux éléments réfléchissants (39, 40), dont l'un est configuré comme élément optique adaptatif (39),

- un diviseur de rayon (43) qui comporte une couche de division qui se trouve à l'origine d'un angle que limitent les bras (41, 42) orthogonaux l'un à l'autre du trajet des rayons dans le microscope, ou des deux parties orthogonales l'une à l'autre du trajet des rayons replié du microscope ; ainsi que

- un dispositif de détection (38), sur lequel est dirigée la lumière de détection venant d'un échantillon (33) examiné avec le microscope et qui est relié par l'intermédiaire d'au moins un dispositif de dépouillement et de positionnement à l'élément réfléchissant adaptatif (39) et

- une source d'éclairage (28) pour l'éclairage de l'échantillon (3),

**caractérisé en ce que**

- le diviseur de rayon (43) est polarisant,

- dans les faisceaux entre le diviseur de rayon (43) et les éléments réfléchissants (39, 40) est disposée respectivement une plaque λ/4 (44, 45), et

- les éléments réfléchissants (39, 40) sont disposés de telle sorte que

- dans l'un des bras (41), la lumière arrivant de la source d'éclairage (28) du microscope, en fonction de son état de polarisation,

- rencontre, à travers la couche de division et la plaque λ/4 (45) disposée dans le trajet des rayons entre le diviseur de rayon (43) et l'élément réfléchissant adaptatif (39), l'élément réfléchissant adaptatif (39), est réfléchie par l'élément réfléchissant adaptatif (39) vers la couche de division et est renvoyée par celle-ci dans l'autre bras (42) à un objectif du microscope (32) et/ou

- est renvoyée par la couche de division en direction de l'élément réfléchissant non adaptatif (40) et, après passage à travers une plaque λ/4 (44) disposée dans le trajet des rayons entre le diviseur de rayon (43) et l'élément réfléchissant non adaptatif (40), est réfléchie par l'élément réfléchissant non adaptatif (40) vers la couche de division et accède à travers cette dernière, par l'autre bras (42), à l'objectif du microscope (32),

- dans l'autre bras (42), la lumière de détection venant de l'échantillon (33), à travers l'objectif du microscope (32), est dirigé sur un dispositif de détection (38).

4. Microscope selon l'une des revendications précédentes, **caractérisé en ce que** les éléments réfléchissants (15, 17 ; 39, 40) comportent chacun une surface réfléchissante qui est orientée perpendiculairement au trajet des rayons entre la couche de division et l'élément réfléchissant (15, 17 ; 39, 40) respectif.

**5.** Microscope selon l'une des revendications précédentes, **caractérisé en ce que** les éléments adaptatifs (15, 17 ; 39) sont positionnés respectivement dans un plan de pupille du trajet des rayons dans le microscope et **en ce qu'**il y a une optique (24) dans le trajet des rayons entre le diviseur de rayon (19 ; 43) et l'objectif du microscope (6 ; 32) pour la reproduction du plan des éléments adaptatifs (15, 17 ; 39) dans un plan de pupille du microscope.

**6.** Microscope à balayage laser selon la revendication 7, **caractérisé en ce qu'**il est configuré comme microscope à balayage laser et possède un dispositif de balayage (7 ; 34), et **en ce que** le plan de la pupille est identique à une surface réfléchissante du dispositif de balayage et **en ce qu'**une optique de balayage du microscope, l'objectif du microscope (6 ; 32) ainsi qu'une lentille de tube (5 ; 31) sont positionnés les uns par rapport aux autres de telle sorte que dans l'échantillon (3 ; 33), un spot limité par la diffraction est engendré, qui est conduit par-dessus l'échantillon (3 ; 33) par suite du mouvement de balayage dans la direction latérale.

**7.** Microscope selon l'une des revendications précédentes, **caractérisé en ce que**, comme éléments adaptatifs (15, 17 ; 39), des miroirs avec des surfaces réfléchissantes ajustables par segmentation, des miroirs à membrane ou des modulateurs réfléchissants Spatial Light sont prévus.

**8.** Microscope selon l'une des revendications précédentes, **caractérisé en ce qu'**à au moins un des éléments adaptatifs (15, 17 ; 39) est affectée une optique zoom (21, 23 ; 46), qui sert à l'adaptation de l'ouverture de ces éléments adaptatifs (15, 17 ; 39) à l'ouverture de l'objectif du microscope (6 ; 32).

Stand der Technik

Fig.1

Fig.2

EP 1 372 011 B1

Fig.3

Fig. 4